# EUROPEAN PATENT APPLICATION

(11) **EP 4 160 470 A1**
(43) Date of publication of application: **05.04.2023**
(21) Application number: 22195307.8
(22) Date of filing: 13.09.2022
(51) Int. Cl.: G06F 40/268, G06F 40/279, G06F 40/30, G06F 40/242

(54) **METHOD AND APPARATUS FOR PROCESSING NATURAL LANGUAGE TEXT, DEVICE AND STORAGE MEDIUM**

(30) Priority: 29.09.2021 CN 202111155070
(71) Applicant: Apollo Intelligent Connectivity (Beijing) Technology Co., Ltd., Beijing 100176 (CN)
(72) Inventor: GE, Yongliang, Beijing, 100176 (CN)
(74) Representative: V.O.

(57) **Abstract**

A method and apparatus for processing a natural language text, a device and a storage medium are provided. An implementation of the method includes: after obtaining a target sentence text to be processed, performing word segmentation on the target sentence text, to obtain a target fixed word slot corresponding to the target sentence text and candidate free word slots corresponding to the target sentence text; then performing, based on syntax rules of preset standard sentence patterns, sentence pattern matching on the target fixed word slot and the candidate free word slots, to obtain a target sentence pattern including the target fixed word slot and a target free word slot; and replacing the target free word slot in the target sentence pattern with a free word corresponding to the target free word slot in the target sentence text, to obtain a target sentence pattern including the free word.

## Description

### TECHNICAL FIELD

The present invention relates to the technical field of data processing, in particular to a method and apparatus for processing a natural language text, a device and a storage medium in natural language processing technology.

### BACKGROUND

Natural language processing is an important direction in the fields of computer science and artificial intelligence. Natural language understanding (NLU) is an important aspect of natural language processing technology. During the NLU, a natural language text needs to be processed to obtain an intention of the text.

### SUMMARY

Embodiments of the present invention provide a method and apparatus for processing a natural language text, electronic device and storage medium.

According to a first aspect of the present invention, a mehtod for processing a natural language text is provided. The method inclides:
obtaining a target sentence text to be processed;
performing word segmentation on the target sentence text, to obtain a target fixed word slot corresponding to the target sentence text and candidate free word slots corresponding to the target sentence text, wherein the target fixed word slot is determined based on a preset dictionary;
performing, based on syntax rules of preset standard sentence patterns, sentence pattern matching on the target fixed word slot and the candidate free word slots, to obtain a target sentence pattern including the target fixed word slot and a target free word slot;
replacing the target free word slot in the target sentence pattern with a free word corresponding to the target free word slot in the target sentence text, to obtain a target sentence pattern including the free word.

According to another aspect of the present invention, an apparatus for processing a natural language text is provided. The apparatus includes:
a target sentence text obtaining module, configured to obtain a target sentence text to be processed;
a segmentation module, configured to perform word segmentation on the target sentence text, to obtain a target fixed word slot corresponding to the target sentence text and candidate free word slots corresponding to the target sentence text, wherein the target fixed word slot is determined based on a preset dictionary;
a sentence pattern matching module, configured to perform, based on syntax rules of preset standard sentence patterns, sentence pattern matching on the target fixed word slot and the candidate free word slots, to obtain a target sentence pattern including the target fixed word slot and a target free word slot;
a target sentence pattern obtaining module, configured to replace the target free word slot in the target sentence pattern with a free word corresponding to the target free word slot in the target sentence text, to obtain a target sentence pattern including the free word.

According to yet another aspect of the present invention, an electronic device is provided. The electronic device includes:
at least one processor; and
a memory connected to the at least one processor by communication, where
the memory stores instructions executable by the at least one processor, and the instructions are executed by the at least one processor, so that the at least one processor can perform the method according to the first aspect.

According to yet another aspect of the present invention, a non-transitory computer-readable storage medium is provided. The non-transitory computer-readable storage medium stores computer instructions, wherein the computer instructions are used to cause a computer to perform the method according to the first aspect.

According to yet another aspect of the present invention, a computer program product is provided. The computer program product comprises a computer program which, when executed by a processor, implements the method according to the first aspect.
It should be understood that the content described in this section is not intended to identify key or important features of embodiments of the present invention, nor is it intended to limit the scope of the present invention. Other features of the present invention will become readily understood from the following specification.

### BRIEF DESCRIPTION OF THE DRAWINGS

The accompanying drawings are used for better understanding of this solution, and do not constitute limitations to the present invention.
FIG. 1 is a schematic diagram of a method for processing a natural language text according to a first embodiment of the present invention;
FIG. 2 is a schematic diagram of a method for processing a natural language text according to a second embodiment of the present invention;
FIG. 3 is a schematic diagram of a method for processing a natural language text according to a third embodiment of the present invention;
FIG. 4 is a schematic diagram of a method for processing a natural language text according to a fourth embodiment of the present invention;
FIG. 5a is a schematic diagram of a specific example of natural language processing in conventional mehtod;
FIG. 5b is a schematic diagram of another specific example of natural language processing in conventional mehtod;
FIG. 6 is a schematic diagram of an example of a method for processing a natural language text according to an embodiment of the present invention;
FIG. 7 is a schematic diagram of another example of a method for processing a natural language text according to an embodiment of the present invention;
FIG. 8 is a schematic structural diagram of an apparatus for processing a natural language text according to a first embodiment of the present invention;
FIG. 9 is a schematic structural diagram of an apparatus for processing a natural language text according to a second embodiment of the present invention; and
FIG. 10 is a block diagram of an electronic device used to implement the method for processing a natural language text according to embodiments of the present invention.

### DETAILED DESCRIPTION OF EMBODIMENTS

Example embodiments of the present invention are described below with reference to the accompanying drawings, where various details of embodiments of the present invention are included to facilitate understanding, and should be considered merely as examples. Therefore, those of ordinary skills in the art should realize that various changes and modifications may be made to embodiments described herein without departing from the scope of the present invention. Similarly, for clearness and conciseness, descriptions of well-known functions and structures are omitted in the following description.

In order to be able to process changing words, embodiments of the present invention provide a method and apparatus for processing a natural language text, an electronic device and a storage medium.

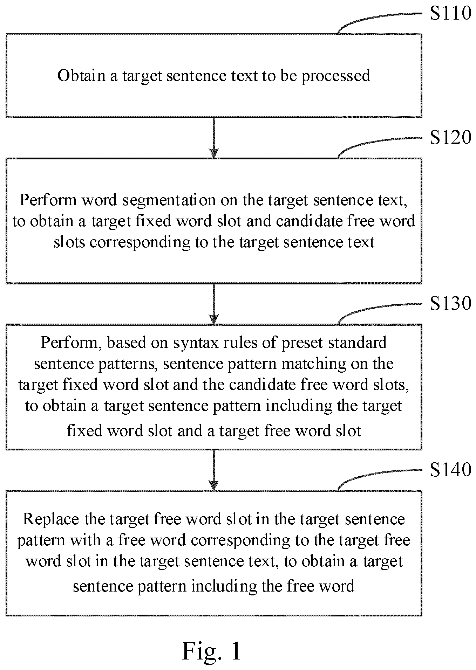

Refer to FIG. 1, which is a schematic diagram of a method for processing a natural language text according to a first embodiment of the present invention. The method may include the following steps:
Step S110: Obtain a target sentence text to be processed;
Step S120: Perform word segmentation on the target sentence text, to obtain a target fixed word slot and candidate free word slots corresponding to the target sentence text, where the target fixed word slo is determined based on a preset dictionary;
Step S130: Perform, based on syntax rules of preset standard sentence patterns, sentence pattern matching on the target fixed word slot and the candidate free word slots, to obtain a target sentence pattern including the target fixed word slot and a target free word slot; and
Step S140: Replace the target free word slot in the target sentence pattern with a free word corresponding to the target free word slot in the target sentence text, to obtain a target sentence pattern including the free word.

In the method for processing a natural language text, provided by the embodiment of the present invention, after the target sentence text to be processed is obtained, the target sentence text is segmented to obtain a corresponding target fixed word slot and candidate free word slots, where the target fixed word slot is determined based on a presetdictionary; then sentence pattern matching is performed on the target fixed word slot and the candidate free word slots based on syntax rules of preset standard sentence patterns, to obtain a corresponding target sentence pattern including the target fixed word slot and a target free word slot; next, the target free word slot in the target sentence pattern is replaced with a free word corresponding to the target free word slot in the target sentence text, to obtain a final target sentence pattern including the free word. In embodiments of the present invention, by setting free word slot(s), the content of non-fixed word(s) input by a user can be identified, that is, changing words can be processed, so that more user instructions can be identified; meanwhile, according to embodiments of the present invention, there is no need to configure a large number of non-fixed words in advance, which reduces memory occupation.

In an embodiment of the present invention, the target sentence text to be processed may be obtained by: the user inputs voice through a device such as a microphone, and the system performs voice recognition on the voice input by the user and converts the voice into text words. Of course, the target sentence text may also be a text input by the user. There is no specific limitation on this in the present invention.

As an implementation manner of the embodiment of the present invention, after the target sentence text is obtained, the target sentence text may be converted, that is, the text may be converted into a machine-recognizable language. For example, the target sentence text may be converted into a character string or character strings according to a preset conversion rule.

After a target sentence text is obtained, the target sentence text may be segmented. Segmentation is a process of recombining consecutive character sequences into word sequences according to certain specifications. In Natural Language Understanding (NLU), segmentation is a very important step and is the basis of NLU.

As described above, in the embodiment of the present invention, after the the target sentence text is segmented, a target fixed word slot and candidate free word slots corresponding to the target sentence text may be obtained.

In the natural language understanding, a word slot may refer to key information or a limiting condition which is required for identifying user intention, that is, a screening condition that needs to be provided by the user, and the word slot may affect the identification of a relevant intention. For example, if the user asks to play song A, the machine needs to obtain a keyword (such as "play") of the intention of playing the song and specific information of the song A (such as song name), so as to identify that the user's intention is to "play song A". Then the keyword "play" of the intention and the song name of song A are word slots that may affect the identification of the intention.

In the embodiment of the present invention, the fixed word slot may refer to a fixed word contained in a standard sentence pattern corresponding to each intention, and the free word slot may refer to a screening condition which is required to specifically identify the intention. Free word slots may be variable for different intentions.

For example, for a standard sentence pattern "make a phone call to XX", because the contacts of users (that is, the objects of the call) are generally different, that is, "XX" is not fixed and may be changed, the "XX" in the standard sentence pattern may correspond to a free word slot, which is variable, where "XX" may be "Zhang San", "Li Si", etc. The operation "make a phone call" in this standard sentence pattern is generally fixed, and most users will use the expression "make a phone call" when they need to call someone. Therefore, the fixed word "make a phone call" may correspond to a fixed word slot. For another example, after a user says "make a phone call to Zhang San", if he wants to change the called object to "Li Si", the commonly used expression may be "replace Zhang San with Li Si". In the standard sentence pattern "replace XX with YY", the specific operation "replace... with..." is generally an expression that most users will use, that is, "replace... with..." is a fixed collocation. Therefore, the fixed collocation "replace... with..." may be regarded as a fixed word, and the fixed word slots corresponding to the fixed word may include "with" and "replace". "XX" and "YY" in the standard sentence pattern "replace XX with YY" are variable, that is, "XX" and "YY" in the standard sentence pattern are free word slots.

After the target fixed word slot and the candidate free word slots of the target sentence text are obtained, sentence pattern matching may be performed on the segmentation results according to the syntax rules of standard sentence patterns.

As mentioned above, the standard sentence pattern "make a phone call to XX" contains the fixed word slot "make a phone call" and the free word slot "XX", therefore, the target sentence pattern "make a phone call to XX" corresponding to the segmentation results may be obtained based on the segmentation results and the syntax rule of the standard sentence pattern.

After the above target sentence pattern is obtained, the corresponding target free word slot in the target sentence pattern can be replaced with the free word. For example, for the above example, "XX" in the target sentence pattern may be replaced with the free word "Zhang San" corresponding to the target free word slot, so as to obtain the final target statement "make a phone call to Zhang San".

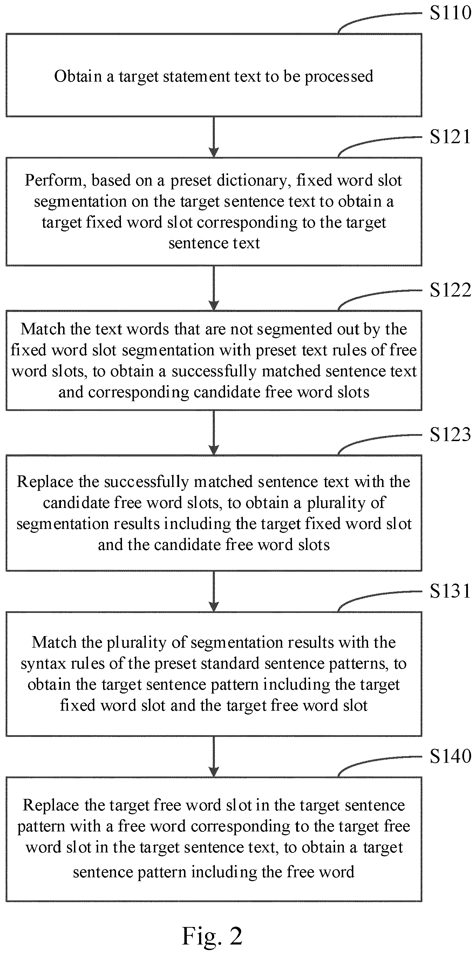

In an embodiment of the present invention, with reference to FIG. 2, in step S120 of FIG. 1 above, segmenting the target sentence text to obtain a target fixed word slot and candidate free word slots corresponding to the target sentence text may be refined into the following steps.

Step S121: Perform, based on a preset dictionary, fixed word slot segmentation on the target sentence text to obtain a target fixed word slot corresponding to the target sentence text.

In the embodiment of the present invention, the preset dictionary may contain a fixed word(s) in each standard sentence pattern and at least one corresponding fixed word slot.

For example, in car driving scenarios, commonly used standard sentence patterns may include "please open the window", "please turn on the air conditioner for me", "please play music", etc. The standard sentence patterns each generally contain a fixed word corresponding to a specific instruction (intention), such as "open the window", "turn on the air conditioner", and "play music". It can be seen that such fixed words generally contain an operation (e.g., open, play, etc.) and an operation object (e.g., window, air conditioner, music, etc.). Therefore, for such standard sentence patterns that do not contain variable words, when they are stored in the dictionary, only fixed word slots corresponding to the corresponding fixed words may be stored, where each fixed word slot may correspond to the operation and operation object contained in the fixed word.

In practical applications, some standard sentence patterns (such as "make a phone call to XX") may include some variable and meaningful content in addition to the fixed word slots, that is, the above-mentioned free word slots. Because the specific content in the free word slot is uncertain and variable, the specific content in the free word slot does not need to be stored in the dictionary, and only the fixed word slot in the standard sentence pattern may be stored in the preset dictionary.

In the embodiment of the present invention, the performing fixed word slot segmentation on the target sentence text refers to matching the target sentence text with the fixed word slots stored in the dictionary. As an implementation manner, performing fixed word slot segmentation on the target sentence text may include travering the fixed word slots stored in the dictionary, and using a successfully matched fixed word slot as a target fixed word slot.

In the embodiment of the present invention, a dictionray that may be applied to all application scenarios may be set. Of course, as an implementation manner of the embodiment of the present invention, different dictionaries may also be preset for different application scenarios, which can reduce the time for searching the content in a dictionary during the segmentation and improve the segmentation speed to a certain extent.

Step S122: Match the text words that are not segmented out by the fixed word slot segmentation with preset text rules of free word slots, to obtain a successfully matched sentence text and corresponding candidate free word slots.

In practical applications, after the fixed word slot segmentation is performed on the target sentence text, it is not always possible to obtain all the final segmentation results. For example, for the target sentence text "make a phone call to Zhang San", "Zhang San" is not a word that all users will use. Therefore, during setting the dictionary, the word "Zhang San" is generally not stored in the dictionary. Therefore, after the target sentence text is segmented based on the fixed word slots in the preset dictionary, the fixed word slot that successfully matches the target sentence text "make a phone call to Zhang San" may be "make a phone call". The unsegmented out word "Zhang San" in the target sentence text may be replaced with a free word slot.

As mentioned above, because the specific content of the free word slot is variable, the specific content of each free word slot is generally not stored in the dictionary. However, for each free word slot, its text rule may be fixed. The text rule may represent the attribute of the free word slot, for example, the specific content in the free word slot may be number, name, etc. Therefore, the text rule corresponding to each free word slot may be defined in advance, and the text rule may be used to match the text words in the target sentence text that are not segmented out by the fixed word slot segmentation, so as to obtain, in the target sentence text, a sentence text that is capable of being successfully matched with a text rule and candidate free word slots corresponding to preset text rules.

Generally, a plurality of free word slots may correspond to the same text rule. For example, the free word slot of which the text rule is "name" may include a calling object, a name before the replacement, a new name after the replacement, etc. In the embodiment of the present invention, after a text rule successfully matched with the target sentence text is obtained, all free word slots corresponding to the successfully matched text rule may be used as candidate free word slots.

Similar to step S121 above, in the embodiment of the present invention, when the unsegmented out words are matched with the preset text rules of preset free word slots, the text rules of free word slots may also be traversed. As an implementation manner, different character strings may be set for different text rules. Therefore, in the character string of the target sentence text, the character string of each text word that is not segmented out by the fixed word slot segmentation may be matched with the character strings of the text rules, to obtain candidate free word slots corresponding to the unsegmented out words in the target sentence text.

For example, with regard to the target sentence text "make a phone call to Zhang San", the word that is not segmented out by the fixed word slot segmentation is "Zhang San", so after the free word slot matching for "Zhang San", the corresponding text rule obtained is name, and each free word slot corresponding to the name is used as a candidate free word slot.

Step S123: Replace the successfully matched sentence text with the candidate free word slots, to obtain a plurality of segmentation results including the target fixed word slot and the candidate free word slots.

After the candidate free word slots are obtained, the successfully matched text may be replaced with each candidate free word slot, so as to obtain all segmentation results of the target sentence text.

Correspondingly, step S130 above may be refined as follows:
Step S131: Match the plurality of segmentation results with the syntax rules of the preset standard sentence patterns, to obtain the target sentence pattern including the target fixed word slot and the target free word slot.

In the embodiment of the present invention, developers may set a different syntax rule for each standard sentence pattern, and may save the syntax rules in a template. Similar to the text rule, the syntax rule may also be expressed in the form of a character string.

After the segmentation results of the target sentence text are obtained, the character strings of the syntax rules may be matched with the character strings of the segmentation results, to determine the target sentence pattern including the target fixed word slot and the target free word slot based on the target fixed word slot and the candidate free word slots.

In the embodiment of the present invention, the text words that are not segmented out by the fixed word slot segmentation may be matched and replaced with the preset text rules of free word slots, so as to obtain complete and comprehensive segmentation results of the target sentence text, which improves the accuracy of the subsequently obtained target sentence pattern corresponding to the target sentence text; and there is not need to store a large number of variable words in the dictionary but only the text rules of free word slots need to be preset for segmenting out free word slots, which can cope with more target sentence texts and greatly reduce memory occupation.

As described above, in the embodiment of the present invention, the text rule of the free word slot may be a character string expression of the text, and the character string expression may be set for various free word slots by a developer during algorithm design. As an implementation manner of the embodiment of the present invention, the character string expression may be a regular expression (regex, regexp or RE). The regular expression refers to constituting a "regular character string" using some pre-defined specific characters and a combination of these specific characters, and the "regular character string" may be used to express a filtering logic for character strings. For example, in the above case of making a phone call to someone, the character string expression of this single free word slot name may be $$<^.^{∗}[^\d].^{∗}; for the sentence pattern "replace XX with YY", the character string expression of "XX" may be set as $$$(?![0-9]+)[\s\S]{1,}, and the character string expression of "YY" may be set as $$$(?![0-9]+)[\s\S]{1,}; and if "XX" and "YY" are numbers, the regular expression of "XX" may be $$$\d{3,4}, and the expression of "YY" may be $$$\d{3,4}. The regular character string may be set by developers themselves. In different programs, the regular expression of the same free word slot may be different.

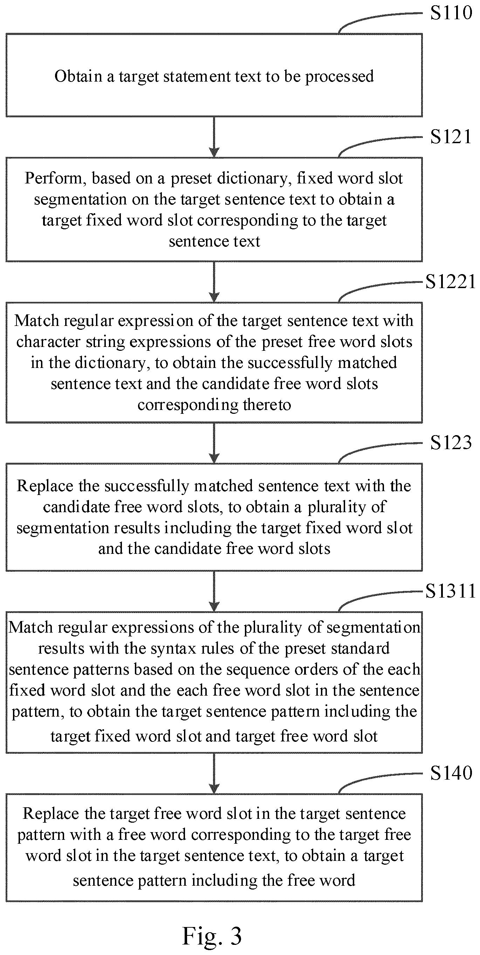

Correspondingly, based on FIG. 2 and with reference to FIG. 3, step S122 above may be refined as follows:
Step S1221: Match regular expression of the target sentence text with character string expressions of the preset free word slots in the dictionary, to obtain the successfully matched sentence text and the candidate free word slots corresponding thereto.

As mentioned above, after the target sentence text is obtained, the target sentence text may be converted into a machine-recognizable character string. Therefore, when regular matching is performed on the text words that are not segmented out by the fixed word slot segmentation, the regular expressions of preset free word slots may matched with the character strings of the unsegmented out words and filteration may be performed, to obtain the successfully matched sentence text and the candidate free word slots corresponding thereto.

In the embodiment of the present invention, the process of matching the text words that are not segmented out by the fixed word slot segmentation with the regular expressions of the free word slots in the dictionary may be refered to as regular correction, that is, the results of fixed word slot segmentation are corrected.

Compared with the fact in conventional mehtod that the segmentation result of a free word slot cannot be obtained and the final result needs to be obtained through options, in the embodiment of the present invention, for a word that is not segmented out based on the fixed word slot, a free word slot corresponding thereto can be obtained by regular matching without using other tools, which improves the convenience of segmentation of the target sentence text.

In an embodiment of the present invention, the above-mentioned syntax rules of the preset standard sentence patterns may include sequence orders of each fixed word slot and each free word slot in each standard sentence pattern. Therefore, based on FIG. 2 and with reference to FIG. 3, step S131 above may be refined as follows:

Step S1311: Match regular expressions of the plurality of segmentation results with the syntax rules of the preset standard sentence patterns based on the sequence orders of the each fixed word slot and the each free word slot in each preset standard sentence pattern, to obtain the target sentence pattern including the target fixed word slot and target free word slot.

In practical applications, a target sentence text containing a plurality of free word slots often appear. For example, for the target sentence text "is XX not YY", to match the first "XX", the preceding "is" and the subsequent "not" may be defined; and to match the second "YY", the "not" may be defined. Because the sequence orders may change, "not XX is YY" may also be defined in a similar way.

In the embodiment of the present invention, the syntax rule of each standard sentence pattern may also be set as a regular expression, the regular expression may include the sequence orders of each free word slot and fixed word slot included in the standard sentence pattern, and the regular expression may be stored in a syntax rule template of the corresponding sentence pattern. When syntactic regular matching is performed on the segmentation results, the regular expression of the above syntax rule may be used to perform regular matching on the obtained target fixed word slot and the candidate free word slots, to obtain a target sentence pattern conforming to the corresponding syntax rule and including target fixed word slot and a target free word slot.

In the embodiment of the present invention, by performing regular matching on segmentation results based on the expressions of the syntax rules, a combination manner of segmentation results that conforms to the syntactic sequence orders may be obtained, and variable free word slots can be processed, so that the result of sentence pattern matching is more accurate.

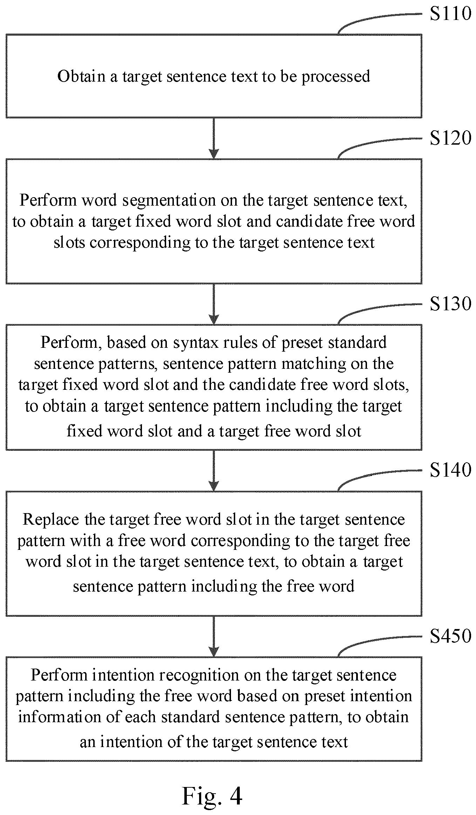

In an embodiment of the present invention, based on FIG. 1 and with reference to FIG. 4, after obtaining the target sentence pattern including the each free word in step S140 above, the method for processing a natural language text may further include the following step:
Step S450: Perform intention recognition on the target sentence pattern including the free word based on preset intention information of each standard sentence pattern, to obtain an intention of the target sentence text.

As an implementation manner of the embodiment of the present invention, a plurality of intentions may be preset, such as "make a phone call to someone", "replace destination A with B", "replace contact A with contact B", etc. Features are extracted from the target sentence pattern, the similarity between the features of the target sentence pattern and the feature of each intention is calculated, and the intention corresponding to the intention feature having the highest similarity to the features of the target sentence pattern is determined as the intention of the target sentence text.

In this embodiment, the dictionary may be stored in the form of a lexicographic tree, the syntax rules may be stored in the form of a syntax tree, and the intention of the target sentence text is recognized by an intention conversion processing module. As a specific implementation manner of the embodiment of the present invention, the intention conversion processing module may input the target sentence pattern including free words into a pre-trained intention recognition model to obtain the intention of the target sentence text.

In the embodiment of the present invention, after the target sentence pattern is recognized, intention recognition may be performed on the target sentence text input by the user based on the target sentence pattern. Because the target sentence pattern includes free word slots and a fixed word slot which are included in the target sentence text, the intention recognition can recognize the specific operation and operation object expected by the user, the accuracy of intention recognition is improved.

The differences between conventional mehtod and the embodiment of the present invention will be described below through specific examples.

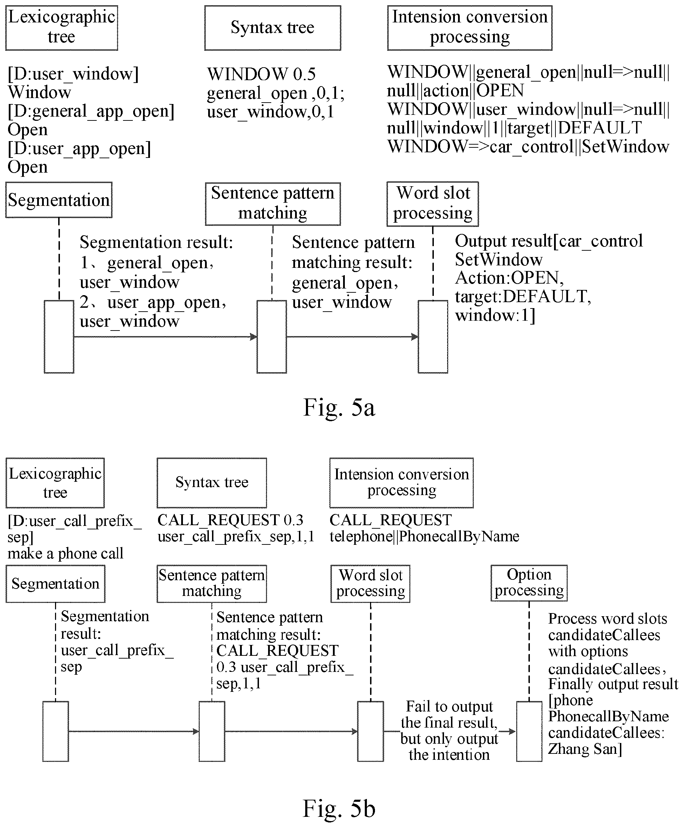

FIG. 5a and FIG. 5b show two situations of processing a target sentence text in conventional mehtod.

As shown in FIG. 5a, the process of processing the target sentence text "open the window" in conventional mehtod may include:

The target sentence text is segmented based on fixed word slots (Data, D) stored in a preset lexicographic tree: window (user window), open (general_app_open), and open (user_app_open), to obtain segmentation results, which may include 1, open (general_ open), window, and 2, open (user app_open), window; then sentence pattern matching is performed on the two segmentation results based on syntax rule templates "window, open window" (WINDOW 0.5 general_open, 0, 1; user window, 0, 1) pre-stored in a syntax tree, to obtain corresponding sentence pattern matching results "open" (general_open) and "window"; next, intention conversion processing is performed on the sentence pattern matching results, to obtain an intention corresponding to the target sentence text: open (WINDOW||general_open||null=>null|||null||action||OPEN) window (WINDOW||user_window||null=>null||null||window||1||target||DEFAULT), and it can be determined that the specific operation that the user expects the vehicle to perform is, in car control, setting the window (WINDOW=>car_control||SetWindow); and correspondingly, the output result after word slot processing based on the sentence pattern matching results is, in car control, setting "open window (car control SetWindow Action:OPEN,target:DEFAULT, window: 1) in window.

With reference to FIG. 5b, in conventional mehtod, when a target sentence text "make a phone call to Zhang San" is processed, the target sentence text may be segmented based on a fixed word slot stored in a lexicographic tree: make a phone call (user_call_prefix_sep), to obtain a segmentation result: make a phone call; then sentence pattern matching is performed on the segmentation result based on a sentence pattern matching rule template call request, make a phone call (CALL_REQUEST 0.3 user_call_prefix_sep, 1, 1) stored in a syntax tree, to obtain a sentence pattern matching result, that is, call request, make a phone call (CALL REQUEST 0.3 user_call_prefix_sep,1,1); after intention conversion processing on the sentence pattern matching result is performed, what obtained is only the user's intention make a phone call to XX(CALL_REQUEST telephone∥PhonecallByName); the final result cannot be output after corresponding word slot processing, but only the intention can be output; and subsequently, it needs to use option processing to process word slot candidate callees before the final output result "make a phone call to Zhang San (phone PhonecallByName, candidateCallees: Zhang San)" is obtained.

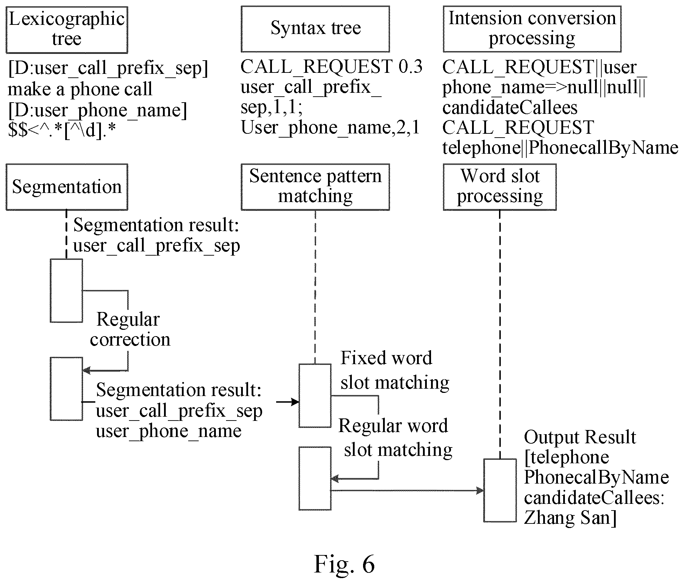

With reference to FIG. 6, when a target sentence text "make a phone call to Zhang San" is processed according to the natural language processing method provided by embodiments of the present invention, fixed word slot segmentation may be first performed on the target sentence text based on the fixed word slot "make a phone call" (user call_prefix_sep) stored in a lexicographic tree, to obtain a target fixed word slot "make a phone call" (user_call_prefix_sep); then the segmentation result is subject to regular correction based on a preset regular expression $$<^.^{∗}[^\d].^{∗} of a contact name (user_phone_name), that is, the unsegmented out words are regularly filtered, to obtain final segmentation results "make a phone call" (user call_prefix_sep) and "contact name" (user_phone_name); next, fixed word slot matching and regular word slot matching are performed on the segmentation results based on a syntax rule template phone request, make a phone call; contact name (CALL_REQUEST 0.3 user_call_prefix_sep,1,1;User_phone_name,2,1) of a standard sentence pattern stored in a syntax tree. In the embodiment of the present invention, the above template may include sequence orders of a fixed word slot and free word slots in the standard sentence pattern (e.g., the number "1" following the "user_call_prefix_sep", and the number "2" following the "User_phone_name" in Fig. 6), and whether a word slot must present (e.g., the second number "1" following the "user_call_prefix_sep" indicates that "make a phone call" presents).

Then, word slot processing is performed based on the intention of making a phone call and candidate contacts (CALL_REQUEST||user_phone_name=>null||null||candidateCallees) obtained by intention conversion processing, to obtain a final output result: make a phone call to Zhang San (telephone PhonecalByName candidateCallees: Zhang San).

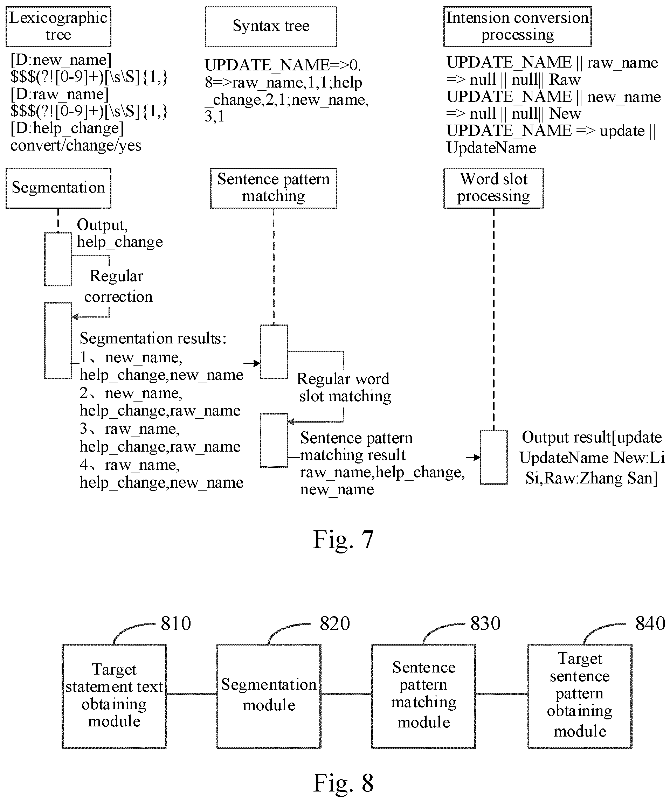

With reference to FIG. 7, when a target sentence text "change Zhang San to Li Si" is processed according to the natural language processing method provided by embodiments of the present invention, a target fixed word slot "convert/change/yes", i.e., output help_change, may be obtained from the target sentence text based on a fixed word slot "convert/change/yes" (help_change) in the lexicographic tree; and regular segmentation correction is performed based on preset regular expressions of free word slots, new name (new_name) $$$(? ! [0-9]+)[\s\S] { 1,}, and raw name (raw_name) $$$(?! [0-9]+)[\s\S] { 1,}, to obtain final segmentation results of the target sentence text: 1, new_name, help_change, new_name (new name, change to, new name); 2, new name, help_change, raw_name (new name,change to, raw name); 3, raw name, help_change, raw name (raw name, change to, raw name); 4, raw name, help_change, new name (raw name, change to, new name). After that, regular word slot matching and sentence pattern matching may be performed on the segmentation results based on a sentence pattern matching rule template: update name: change raw name to new name (UPDATE_NAME=>0.8=>raw_name,1,1;help_change,2,1;new_ name,3,1) pre-stored in a syntax tree, to obtain a sentence pattern matching result: change raw name to new name (raw name, help_change, new name). The sentence pattern matching rule template includes sequence orders of fixed word slot and free word slots, that is, "raw name" is in the first place, followed by "convert/change/yes", and finally "new name", and the "raw name", "convert/change/yes", and "new name" all need to be present. The regular word slot matching is to perform regular filtering once on the obtained segmentation results based on the regular expression of the syntax rule including the sequence orders of fixed word slot and free word slots, to determine a target free word slot corresponding to the content of each sentence text.

Then, word slot processing is performed based on update name, raw name (UPDATE_NAME ||raw_name=> null || null∥Raw, UPDATE_NAME||new_name=> null ||null∥ New, and UPDATE_NAME => update ||UpdateName) obtained by intention conversion processing, to obtain a final output result: update UpdateName New: Li Si, Raw: Zhang San.

It can be seen that the conventional mehtod cannot directly obtain the specific content in a free word slot through word slot processing, and cannot support the processing of multiple free word slots. The natural language processing method provided by embodiments of the present invention can obtain the specific content in free word slot(s) through word slot processing, and can be applied to the scenarios of single free word slot and multiple free word slots, so that the function of natural speech processing is more powerful and the application range is wider.

In an embodiment of the present invention, an apparatus for processing a natural language text is further provided. With reference to FIG. 8, the apparatus may include:
a target sentence text obtaining module 810, configured to obtain a target sentence text to be processed;
a segmentation module 820, configured to perform word segmentation on the target sentence text, to obtain a target fixed word slot corresponding to the target sentence text and candidate free word slots corresponding to the target sentence text, wherein the target fixed word slot is determined based on a preset dictionary;
a sentence pattern matching module 830, configured to perform, based on syntax rules of preset standard sentence patterns, sentence pattern matching on the target fixed word slot and the candidate free word slots, to obtain a target sentence pattern including the target fixed word slot and a target free word slot; and
a target sentence pattern obtaining module 840, configured toreplace the target free word slot in the target sentence pattern with a free word corresponding to the target free word slot in the target sentence text, to obtain a target sentence pattern including the free word.

In the apparatus for processing a natural language text, provided by embodiments of the present invention, after the target sentence text to be processed is obtained, the target sentence text is segmented to obtain a corresponding target fixed word slot and candidate free word slots, where the target fixed word slot is determined based on a presetdictionary; then sentence pattern matching is performed on the target fixed word slot and the candidate free word slots based on syntax rules of preset standard sentence patterns, to obtain a corresponding target sentence pattern including the target fixed word slot and a target free word slot; next, the target free word slot in the target sentence pattern is replaced with a free word corresponding to the target free word slot in the target sentence text, to obtain a final target sentence pattern including the free word. In embodiments of the present invention, by setting free word slot(s), the content of non-fixed word(s) input by a user can be identified, that is, changing words can be processed, so that more user instructions can be identified; meanwhile, according to embodiments of the present invention, there is no need to configure a large number of non-fixed words in advance, which reduces memory occupation.

In an embodiment of the present invention, the segmentation module 820 may be configured to:
based on the preset dictionary, perform fixed word slot segmentation on the target sentence text according to the preset dictionary, to obtain the target fixed word slot corresponding to the target sentence text;
match text words that are not segmented out by the fixed word slot segmentation with text rules of preset free word slots, to obtain a successfully matched sentence text and the candidate free word slots corresponding thereto; and
replace the successfully matched sentence text with the candidate free word slots, to obtain a plurality of segmentation results including the target fixed word slot and the candidate free word slots.

In this way, the sentence pattern matching module 830 may be configured to match the plurality of segmentation results with the syntax rules of the preset standard sentence patterns, to obtain the target sentence pattern including the target fixed word slot and the target free word slot.

In an embodiment of the present invention, the text rule of the free word slot may be a character string expression of the text;

The segmentation module 820 may be configured to:
match regular expression of the target sentence text with character string expressions of the preset free word slots in the dictionary, to obtain the successfully matched sentence text and the candidate free word slots corresponding thereto.

In an embodiment of the present invention, a syntax rule of each preset standard sentence pattern includes sequence orders of each fixed word slot and each free word slot of each standard sentence pattern in the each standard sentence pattern;

The sentence pattern matching module 830 may also be configured tomatch regular expressions of the plurality of segmentation results with the syntax rules of the preset standard sentence patterns based on the sequence orders of the each fixed word slot and the each free word slot in each preset standard sentence pattern, to obtain the target sentence pattern including the target fixed word slot and target free word slot.

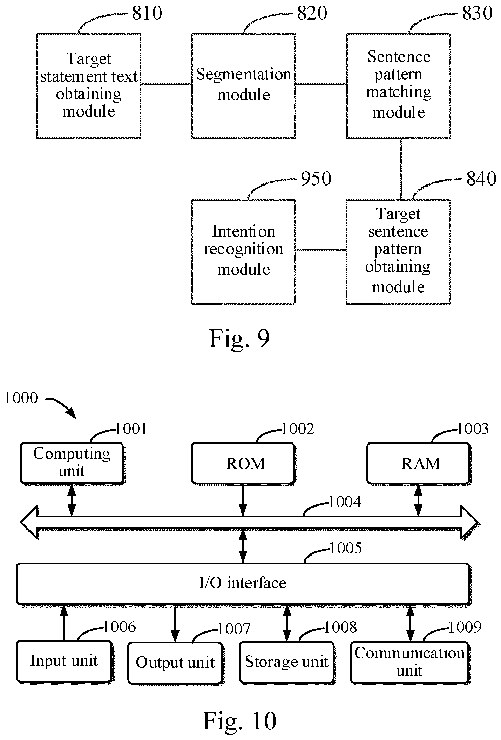

In an embodiment of the present invention, as shown in FIG. 9, the apparatus for processing a natural language text shown in FIG. 8 may further include an intention recognition module 950;

The intention recognition module 950 may be configured to perform intention recognition on the target sentence pattern including the free word based on preset intention information of the each preset standard sentence pattern, to obtain an intention of the target sentence text.

In the technical solutions of the present invention, the collection, storage, use, processing, transmission, provision and invention of user's personal information involved are all in compliance with relevant laws and regulations, and do not violate public order and good customs.

According to the embodiments of the present invention, the present invention further provides an electronic device, a readable storage medium, and a computer program product.

FIG. 10 shows a schematic block diagram of an exemplary electronic device 1000 that may be used to implement embodiments of the present invention. The electronic device is intended to represent various forms of digital computers, such as a laptop, a desktop, a worktable, a personal digital assistant, a server, a blade server, a mainframe computer, and other suitable computers. The electronic device may also represent various forms of mobile devices, such as a personal digital assistant, a cellular phone, a smart phone, a wearable device, and other similar computing devices. The components shown herein, their connections and relationships, and their functions are by way of example only, and are not intended to limit implementations of the present invention described and/or claimed herein.

As shown in FIG. 10, the device 1000 includes a computing unit 1001, which may perform various appropriate operations and processes based on computer programs stored in a read-only memory (ROM) 1002 or computer programs loaded from a storage unit 1008 to a random access memory (RAM) 1003. The RAM 1003 may also store various programs and data required by the operations of the device 1000. The computing unit 1001, the ROM 1002, and the RAM 1003 are connected to each other by a bus 1004. An input/output (I/O) interface 1005 is also connected to the bus 1004.

A plurality of components in the device 1000 are connected to the I/O interface 805, including: an input unit 1006, e.g., a keyboard, a mouse, etc.; an output unit 1007, e.g., various types of displays, speakers, etc.; a storage unit 1008, e.g., a magnetic disk, an optical disk, etc.; and a communication unit 1009, e.g., a network card, a modem, a wireless communication transceiver, etc. The communication unit 1009 allows the device 1000 to exchange information/data with other devices over a computer network such as the Internet and/or various telecommunication networks.

The computing unit 1001 may be a variety of general-purpose and/or dedicated processing components with processing and computing capabilities. Some examples of the computing unit 1001 include, but are not limited to, a central processing unit (CPU), a graphics processing unit (GPU), various specialized artificial intelligence (AI) computing chips, various computing units that run machine learning model algorithms, a digital signal processor (DSP), and any suitable processor, controller, microcontroller, etc. The computing unit 1001 performs the various methods and processes described above, such as the method for processing a natural language text. For example, in some embodiments, the method of processing a natural language text may be implemented as a computer software program tangibly included in a machine-readable medium, such as the storage unit 1008. In some embodiments, some or all of the computer program may be loaded and/or installed to the device 1000 via the ROM 1002 and/or the communication unit 1009. When the computer program is loaded to the RAM 1003 and executed by the computing unit 1001, one or more steps of the above-described method for processing a natural language text may be performed. Alternatively, in other embodiments, the computing unit 1001 may be configured to perform the method for processing a natural language text by any other suitable means (e.g., by means of firmware).

Various embodiments of the systems and techniques described herein above may be implemented in a digital electronic circuit system, an integrated circuit system, a field programmable gate array (FPGA), an application specific integrated circuit (ASIC), an application specific standard product (ASSP), a system on chip (SOC), a load programmable logic device (CPLD), computer hardware, firmware, software, and/or combinations thereof. The various embodiments may include being implemented in one or more computer programs executable and/or interpretable on a programmable system including at least one programmable processor. The programmable processor may be a special-purpose or general-purpose programmable processor, and may receive data and instructions from a storage system, at least one input device, and at least one output device, and transmit data and instructions to the storage system, the at least one input device, and the at least one output device.

Program codes for implementing the method of the present invention may be written in one programming language or any combination of more programming languages. The program codes may be provided to a processor or controller of a general purpose computer, a special purpose computer or other programmable data processing apparatus, so that the program codes, when executed by the processor or controller, cause the functions/operations specified in the flowcharts and/or block diagrams to be implemented. The program codes may be completely executed on a machine, partially executed on a machine, partially executed on a machine and partially executed on a remote machine as a separate software package, or completely executed on a remote machine or a server.

In embodimetns of the present invention, the machine readable medium may be a tangible medium that may contain or store programs used by a command execution system, apparatus or device or incorporated thereto. The machine-readable medium may be a machine-readable signal medium or a machine-readable storage medium. The machine-readable medium may include, but is not limited to, electric, magnetic, optical, electromagnetic, infrared, or semiconductor systems, apparatuses, devices, or a combination of any of the above. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), a fiber, a portable compact disk read-only memory (CD-ROM), an optical memory, a magnet memory, or any suitable combination of the above.

To provide interaction with a user, the system and technology described herein may be implemented on a computer, the computer including: a display device (for example, a CRT (cathode ray tube) or LCD (liquid crystal display) monitor) for displaying information to the user); and a keyboard and a pointing device (for example, a mouse or a trackball) through which the user can provide input to the computer. Other types of devices may also be used to provide interaction with the user, for example, the feedback provided to the user may be any form of sensory feedback (for example, visual feedback, auditory feedback, or tactile feedback); and may be in any form (including acoustic input, voice input, or tactile input) to receive input from the user.

The system and technology described herein may be implemented on a computing system including back-end components (for example, serving as a data server), or a computing system including middleware components (for example, an application server), or a computing system including front-end components (for example, a user computer having a graphical user interface or a web browser through which the user can interact with the embodiments of the system and technology described herein), or a computing system including any combination of such back-end components, middleware components, or front-end components. The components of the system may be interconnected by any form or medium of digital data communication (for example, a communication network). Examples of the communication network include: a Local Area Network (LAN), a Wide Area Network (WAN), and the Internet.

The computer system may include a client and a server. The client and the server are generally remote from each other and usually interact through a communication network. The relationship between the client and the server is generated by virtue of computer programs running on corresponding computers and having a client-server relationship to each other. The server may be a cloud server, a distributed system server, or a server combined with a blockchain.

It should be understood that various forms of processes shown above may be used to reorder, add, or delete steps. For example, the steps described in embodiments of the present invention may be performed in parallel, sequentially, or in different orders, as long as the desired results of the technical solution disclosed in embodiments of the present invention can be achieved, no limitation is made herein.

The above specific embodiments do not constitute a limitation on the protection scope of the present invention. Those skilled in the art should understand that various modifications, combinations, sub-combinations and substitutions can be made according to design requirements and other factors. Any modification, equivalent replacement and improvement made within the principle of the present invention shall be included in the protection scope of the present invention.

## Claims

1. A method for processing a natural language text, comprising:
obtaining a target sentence text to be processed;
performing word segmentation on the target sentence text, to obtain a target fixed word slot corresponding to the target sentence text and candidate free word slots corresponding to the target sentence text, wherein the target fixed word slot is determined based on a preset dictionary;
performing, based on syntax rules of preset standard sentence patterns, sentence pattern matching on the target fixed word slot and the candidate free word slots, to obtain a target sentence pattern including the target fixed word slot and a target free word slot; and
replacing the target free word slot in the target sentence pattern with a free word corresponding to the target free word slot in the target sentence text, to obtain a target sentence pattern including the free word.

2. The method according to claim 1, wherein
the step of performing word segmentation on the target sentence text, to obtain the target fixed word slot and the candidate free word slots corresponding to the target sentence text comprises:
performing fixed word slot segmentation on the target sentence text according to the preset dictionary, to obtain the target fixed word slot corresponding to the target sentence text;
matching text words that are not segmented out by the fixed word slot segmentation with text rules of preset free word slots, to obtain a successfully matched sentence text and the candidate free word slots corresponding thereto; and
replacing the successfully matched sentence text with the candidate free word slots, to obtain a plurality of segmentation results including the target fixed word slot and the candidate free word slots;
the step of performing, based on the syntax rules of the preset standard sentence patterns, sentence pattern matching on the target fixed word slot and the candidate free word slots, to obtain the target sentence pattern including the target fixed word slot and the target free word slot comprises:
matching the plurality of segmentation results with the syntax rules of the preset standard sentence patterns, to obtain the target sentence pattern including the target fixed word slot and the target free word slot.

3. The method according to claim 2, wherein
a text rule of a free word slot refers to a character string expression of a text; and
the step of matching the text words that are not segmented out by the fixed word slot segmentation with the text rules of the preset free word slots, to obtain the successfully matched sentence text and the candidate free word slots corresponding thereto comprises:
matching regular expression of the target sentence text with character string expressions of the preset free word slots in the dictionary, to obtain the successfully matched sentence text and the candidate free word slots corresponding thereto.

4. The method according to claim 3, wherein
a syntax rule of each preset standard sentence pattern includes sequence orders of each fixed word slot and each free word slot of each standard sentence pattern in the each standard sentence pattern; and
the step of matching the plurality of segmentation results with the syntax rules of the preset standard sentence patterns, to obtain the target sentence pattern including the target fixed word slot and the target free word slot comprises:
matching regular expressions of the plurality of segmentation results with the syntax rules of the preset standard sentence patterns based on the sequence orders of the each fixed word slot and the each free word slot in each preset standard sentence pattern, to obtain the target sentence pattern including the target fixed word slot and target free word slot.

5. The method according to any one of claims 1 to 4, further comprising:
performing intention recognition on the target sentence pattern including the free word based on preset intention information of the each preset standard sentence pattern, to obtain an intention of the target sentence text.

6. An apparatus for processing a natural language text, the apparatus comprising means for carrying out the method according to any one of claims 1-5.

7. An electronic device, comprising:
at least one processor; and
a memory connected to the at least one processor by communication, wherein
the memory stores instructions executable by the at least one processor, and the instructions, when executed by the at least one processor, cause the at least one processor to perform the method according to any one of claims 1-5.

8. A non-transitory computer-readable storage medium storing computer instructions, wherein the computer instructions, when executed by a computer, cause the computer to perform the method according to any one of claims 1-5.

9. A computer program product, comprising a computer program which, when executed by a processor, cause the processor to implement the method according to any one of claims 1-5.
